# EUROPÄISCHE PATENTANMELDUNG

(11) **EP 2 420 644 A2**
(43) Veröffentlichungstag der Anmeldung: **22.02.2012**
(21) Anmeldenummer: 11005548.0
(22) Anmeldetag: 07.07.2011
(51) Int. Cl.: E06B 3/82, B32B 21/13, A47B 96/20

(54) **Verbundplatte mit Massivholzkante und Dehnungsnut**

(30) Priorität: 20.08.2010 DE 202010011630 U
(71) Anmelder: Holzbau Schmid GmbH & Co. KG, 73099 Adelberg (DE)
(72) Erfinder: Schmid, Claus, 73099 Adelberg (DE)
(74) Vertreter: Ring & Weisbrodt

(57) **Zusammenfassung**

Die Erfindung betrifft eine Verbundplatte für ein Türblatt oder dergleichen, insbesondere für Brandschutzzwecke, mit einem Kern aus einem Plattenwerkstoff, insbesondere einer Holz- oder Holzwerkstoffplatte, wobei der Kern zumindest auf beiden Flachseiten mit je einer Schicht aus Furnier und an wenigstens einer der Stoßkanten des Kerns mit einer Massivholzkante versehen ist, welche dadurch gekennzeichnet ist, dass der Kern in der mit der Massivholzkante versehenen Stoßkante zumindest eine sich über die gesamte Länge dieser Stoßkante erstreckende Dehnungsnut aufweist. Die Erfindung betrifft ferner ein Herstellungsverfahren für eine solche Verbundplatte sowie eine verschließbare Brandschutzöffnung, die eine derartige Verbundplatte aufweist.

## Beschreibung

Die vorliegende Erfindung betrifft eine Verbundplatte für ein Türblatt oder dergleichen, mit einem Kern aus einem Plattenwerkstoff, insbesondere einer Holz- oder Holzwerkstoffplatte, wobei der Kern zumindest auf beiden Flachseiten mit einer Schicht aus Furnier und an wenigstens einer der Stoßkanten des Kerns mit einer Massivholzkante versehen ist. Die Erfindung betrifft ferner ein Herstellungsverfahren für eine solche Verbundplatte sowie eine verschließbare Brandschutzöffnung, die eine derartige Verbundplatte aufweist.

Verbundplatten der eingangs genannten Art sind bereits seit langem bekannt. Dabei werden beispielsweise Spanplatten oder andere Holzwerkstoffplatten insbesondere an der Schmalkante mit einem Anleimer aus Massivholz, also einer Massivholzkante versehen, um die Stabilität und Optik des Türblatts in diesem Bereich zu verbessern, und beidseitig mit Furnier belegt.

Zwar hat eine solche Konstruktion durch den Einsatz der Massivholzkante Vorteile mit Blick auf die Stabilität, jedoch treten häufig Probleme an der Nahtstelle zwischen Holzwerkstoffplatte und Massivholzkante auf, die in dem unterschiedlichen Schwundverhalten dieser Materialien begründet sind. Insbesondere die Massivholzkante arbeitet sowohl in Abhängigkeit von der Temperatur als auch von der Luftfeuchtigkeit, was an der Verbindungsnaht zur Holzwerkstoffplatte/Trägerplatte mit der Zeit zur Ausbildung von Absätzen oder gar Rissen führen kann. Auch eine teilweise Delamination der Furnierschicht kann dadurch hervorgerufen werden. Dieses Problem kann nicht nur zwischen einer Holzverbundwerkstoffplatte und einer Massivholzkante auftreten, sondern ebenso bei Türen, deren Türblatt aus Massivholz besteht, insbesondere wenn Türblatt und Massivholzkante aus verschiedenen Holzarten bestehen.

Um diesem Problem entgegenzutreten wurde bislang versucht, das Holz für die Massivholzkante auf den Trocknungszustand des späteren Einsatzbereichs vorzutrocknen. Dies hat jedoch häufig nicht zum gewünschten Erfolg geführt, da zwischen der Fertigungsstätte und der späteren Einbaustelle diverse Transportvorgänge und Zwischenlagerungen etc. vollzogen werden müssen, bei denen die Klimabedingungen nicht in erforderlicher Weise eingehalten werden können. Auch ist der spätere Einsatzbereich des Produkts in den meisten Fällen nicht bekannt, so dass es trotz dieser Lösungsversuche nach wie vor zu den oben genannten Problemen kommt.

Ein weiteres Problem ergibt sich dahingehend, dass sich Holzkonstruktionen der eingangs genannten Art nur bedingt für den Einsatz im Brandschutzbereich eignen. Das liegt daran, dass es an der Verbindung zwischen Holzverbundwerkstoffplatte und Massivholzkante bei einseitiger Temperaturbeanspruchung, wie sie im Brandfall auftritt, leicht zu Rissbildungen kommen kann. Die Rissbildung kann dabei soweit fortschreiten, dass es zu einem vollständigen Lösen der Massivholzkante von der Verbundwerkstoffplatte kommt. Dadurch oder durch die entstehenden Risse kann Rauch und Hitze in den brandabseitigen Raum übertreten, der von der Tür geschützt werden soll. Somit ist der Brandschutz solcher Türen unzureichend.

Die Aufgabe der vorliegenden Erfindung besteht darin, eine Verbundplatte zu schaffen, bei der die Tendenz zur Riss- oder Absatzbildung zwischen dem Kern aus einem Plattenwerkstoff, insbesondere einer Holz- oder Holzwerkstoffplatte und der Massivholzkante erheblich reduziert wird. Diese Verbundplatte soll sich außerdem für Brandschutzzwecke eignen.

Diese Aufgabe wird gelöst durch eine Verbundplatte für ein Türblatt oder dergleichen, insbesondere für Brandschutzzwecke, mit einem Kern aus einem Plattenwerkstoff, insbesondere einer Holz- oder Holzwerkstoffplatte, wobei der Kern zumindest auf beiden Flachseiten mit je einer Schicht aus Furnier und an wenigstens einer der Stoßkanten des Kerns mit einer Massivholzkante versehen ist und die Verbundplatte dadurch gekennzeichnet ist, dass der Kern in der mit der Massivholzkante versehenen Stoßkante zumindest eine sich über die gesamte Länge dieser Stoßkante erstreckende Dehnungsnut aufweist.

Der vorliegenden Erfindung liegt die Erkenntnis zugrunde, dass mittels einer Dehnungsnut, welche in der Stoßkante des Kerns unterhalb der Massivholzkante angebracht ist und dort einen Hohlraum bildet, das unterschiedliche Dehnungsverhalten von Kern und Massivholzkante ausgeglichen werden kann, so dass eine Rissbildung an der Nahtstelle zwischen diesen Werkstoffen unterbleibt. Dehnt sich beispielweise die Massivholzkante durch Aufnahme von Luftfeuchtigkeit, wird die Dehnungsnut in der Nähe der Stoßkante des Kerns durch die sich ausdehnende Massivholzkante geringfügig aufgespreizt, so dass die Spannung nicht mehr alleine an der Grenzfläche zwischen den Bauteilen auftritt, sondern auch innerhalb des Kerns im Bereich der Dehnungsnut verteilt wird.

Anstelle einer Dehnungsnut können auch mehrere Dehnungsnuten in dieser Weise verwendet werden, beispielsweise zwei oder drei Dehnungsnuten, die vorzugsweise parallel zueinander in einer Stoßkante verlaufen.

Die erfindungsgemäße Verbundplatte kann an ihren übrigen Stoßkanten mit Furnierholz versehen sein oder aber auch mit Massivholzkanten und Dehnungsnuten in der erfindungsgemäßen Weise ausgerüstet sein.

Die im Rahmen der vorliegenden Erfindung eingesetzte Massivholzkante besteht üblicherweise aus einem Holzprofil. Die Massivholzkante erstreckt sich zweckmäßigerweise über die gesamte Breite des Kerns an der entsprechenden Stoßkante, an der die Massivholzkante angebracht ist.

Der Kern der erfindungsgemäßen Verbundplatte kann ein- oder mehrlagig aufgebaut sein. Bei mehrlagigem Aufbau können die einzelnen Lagen auf an sich bekannte Methoden aneinander befestigt sein, wie durch Verleimen, Verdübeln, Verschrauben, Vernageln oder mittels Kombinationen dieser Methoden. Als Materialien für die Lage beziehungsweise Lagen kommen prinzipiell sämtliche Hölzer oder Holzwerkstoffe in Frage sowie Plattenwerkstoffe der Baustoffklasse A, aus denen sich Platten fertigen lassen. Vorzugsweise bestehen die Platten aus Massivholz, Sperrholz, Holzspan- und/ oder Holzfaserwerkstoffen.

Sperrhölzer sind beispielsweise Brettsperrholz, Brettschichtholz, Stabsperrholz, Vollholzelemente aus kreuzweise geschichteten Brettern, Furniersperrholz, Furnierschichtholz, Furnierstreifenholz, Biegesperrholz oder Kunstharzpressholz.

Als Holzspanwerkstoffe kommen beispielsweise Flachpressplatten (FPY), allgemein als Spanplatten bezeichnet, Strangpressplatten, Grobspanplatten, auch OSB-Platte genannt, oder Spanstreifenholz (LSL) zum Einsatz.

Geeignete Holzfaserwerkstoffe sind unter anderem Holzfaserdämmplatten (HFD) (auch poröse Faserplatte und "Soft Board" (SB)), mittelharte Faserplatten (MB), harte Faserplatten (HB oder HFH), extraharte Faserplatten (HFE) oder hochdichte Faserplatten (HDF). Andere geeignete Plattenwerkstoffe sind Kalzium-Silikatplatten und Vermiculit-Platten.

Nach einer bevorzugten Weiterbildung der erfindungsgemäßen Verbundplatte ist die Massivholzkante an der Stoßkante des Kerns über wenigstens eine Nut-Federverbindung befestigt. Auf diese Weise kann ein besonders fester Zusammenhalt zwischen diesen Bauteilen gewährleistet werden. Zur Erzeugung dieser Verbindung kann entweder eine Verbindungsnut an wahlweise einem der Bauteile angebracht und die Feder an dem jeweils anderen Bauteil ausgestaltet sein, beispielsweise durch ein entsprechendes Fräsprofil. Vorzugsweise werden jedoch beide miteinander zu verbindenden Bauteile mit einer Verbindungsnut versehen, in die dann eine separate Feder eingesetzt wird.

Besonders bevorzugt ist es, wenn die Massivholzkante an der Stoßkante des Kerns über wenigstens zwei Nut-Federverbindungen befestigt ist, wobei deren Verbindungsnuten in der mit der Massivholzkante versehenen Stoßkante beidseitig der Dehnungsnut verlaufen. Eine solche Anordnung bietet den Vorteil einer stabilen Verbindung zwischen dem Kern und der Massivholzkante an beiden Seiten der Dehnungsnut. Beim Arbeiten der Bauteile aufgrund von Luftfeuchtigkeits- und/ oder Temperaturbeanspruchung wirken so die entstehenden Spannungen beidseitig und damit gleichmäßiger auf die Dehnungsnut. Sind mehrere Dehnungsnuten vorgesehen, sind die Verbindungsnuten der Nut-Federverbindung beidseitig außerhalb der jeweils äußeren Dehnungsnuten vorgesehen.

In vorteilhafter Ausgestaltung dieser Ausführungsform sind die beidseitig der Dehnungsnut verlaufenden Verbindungsnuten jeweils in der Nähe der nächstliegenden Flachseite des Kerns angeordnet. Besonders vorteilhaft ist eine Anordnung, bei welcher der Abstand der beidseitig der Dehnungsnut verlaufenden Verbindungsnuten zur nächstliegenden Flachseite des Kerns geringer ist als der Abstand zur Deh-nungsnut. Da von der Dehnungsnut in erster Linie der Teil der Dehnungsunterschiede zwischen Kern und Massivholzkante aufgenommen werden kann, der zwischen den durch die Nut-Federverbindungen gebildeten Befestigungspunkten entsteht, ist die Resistenz einer solchen Ausführungsform gegen Riss- oder Versatzbildung besonders hoch.

Bei der erfindungsgemäßen Verbundplatte kann in weiter bevorzugter Ausgestaltung die Dehnungsnut und/ oder die beidseitig der Dehnungsnut verlaufenden Verbindungsnuten weitestgehend parallel zu den Flachseiten des Kerns ausgebildet sein.

Besonders vorteilhaft ist es, wenn die Dehnungsnut weitestgehend mittig in der mit der Massivholzkante versehenen Stoßkante des Kerns angeordnet ist. Auf diese Weise können die beim Arbeiten der Materialien auftretenden Spannungen gleichmäßig auf die Stege des Kerns beidseitig der Dehnungsnut übertragen werden. Sind mehrere parallele Dehnungsnuten vorgesehen, so können diese in der Weise angeordnet sein, dass sich deren geometrische Mittellinie weitestgehend mittig in der mit der Massivholzkante versehenen Stoßkante befindet.

Sind Nut-Federverbindungen zwischen Kern und Massivholzkante vorgesehen, können die Federn der Nut-Federverbindungen aus Holz bestehen und sind vorzugsweise mit den Verbindungsnuten verklebt. Anstelle der Nut-Federverbindung oder auch in Ergänzung zu dieser kann die Massivholzkante an der Stoßkante des Kerns mittels eines Klebstoffs befestigt sein. Hierzu können mehrere Klebefugen ausgebildet sein.

Für diese beiden Arten der Verklebung sowie auch alle anderen Verklebungen im Rahmen der vorliegenden Erfindung können sämtliche, für die Verbindung von (Massiv-)Holz oder Holzwerkstoffen bekannte Klebstoffe verwendet werden. Dies sind beispielsweise Wasserglaskleber und Klebstoffe auf Basis von Polyvinylacetat, ein- oder zweikomponentigen Polyurethan- oder Epoxidklebstoffe, silikon- oder silanbasierten Klebstoffe, Kondensationsharze wie Formaldehyd-Phenol-Harze; Schmelzklebstoffe auf Basis von Polyamiden, Polyolefinen, insbesondere Polyethylen und Polypropylen, amorphen Polyalphaolefinen, Ethylenvinylacetat-Copolymeren, Polyester-Elastomeren, Polyurethan-Elastomeren, Copolyamid-Elastomeren und Vinylpyrrolidon/Vinylacetat-Copolymeren. Auch Leime wie Glutinleim, Kaseinleim, Harnstoff-Formaldehydharzleim, Phenol-Formaldehydharzleim, Resorzin-Formaldehydharzleim, formaldehydarmer Polykondensationsleim, formaldehydfreier Dispersionsleim oder PU-Leim können verwendet werden, um nur einige zu nennen. Außerdem können ebenso Mischungen aller zuvor genannten Systeme eingesetzt werden.

Nach einer weiteren bevorzugten Ausführungsform der erfindungsgemäßen Verbundplatte weist die Massivholzkante dieselbe Stärke auf wie der Kern. Auf diese Weise werden die Flachseiten des Kerns durch die Massivholzkante fortgeführt, was eine Belegung der gesamten Fläche mit Furnierholz erleichtert. Zur weiteren Verbesserung des optischen Erscheinungsbildes der erfindungsgemäßen Verbundplatte vor allem im Hinblick auf die Homogenität ihrer Oberfläche können sich die Schichten aus Furnierholz wahlweise über die Massivholzkante erstrecken.

Ein weiterer Gegenstand der vorliegenden Erfindung betrifft eine verschließbare Brandschutzöffnung, insbesondere in Form einer Brandschutztür, die eine erfindungsgemäße Verbundplatte umfasst. Brandschutzöffnungen dieser Art besitzen aufgrund der verbesserten Resistenz der Materialgrenze zwischen Kern und Massivholzkante gegenüber Rissbildung deutlich verbesserte Brandschutzeigenschaften gegenüber den eingangs zum Stand der Technik beschriebenen Konstruktionen.

In vorteilhafter Ausgestaltung der verschließbaren Brandschutzöffnung kann die Verbundplatte eine Ausnehmung aufweisen, in die eine Brandschutzverglasung eingesetzt ist, insbesondere eine intumeszierende Brandschutzverglasung. Auf diese Weise kann beispielsweise eine Brandschutztür oder aber auch ein Brandschutzfenster realisiert werden. Mit anderen Worten bildet die erfindungsgemäße Verbundplatte bei dieser Ausführungsform den Rahmen für die Verglasung.

Im Rahmen der vorliegenden Erfindung sind prinzipiell sämtliche bekannten Typen von Brandschutzscheiben einsetzbar. Diese sind im Falle der intumeszierenden Brandschutzverglasung aus mehreren Lagen Glas mit innenliegender Funktionsschicht aus einem intumeszierenden Material gebildet. Gewünschtenfalls können noch weitere Zwischenschichten vorhanden sein, welche beispielsweise der Wärmedämmung oder Schallisolation dienen. Die intumeszierenden Schichten sind im Normalfall transparent, schäumen jedoch bei Einwirkung von Hitze auf und werden hierdurch undurchsichtig. Hierdurch wird die Durchlässigkeit der Brandschutzscheibe gegenüber Wärmestrahlung drastisch reduziert. Das Aufschäumen wird durch die Abspaltung bzw. Verdampfen gasförmiger Bestandteile des intumeszierenden Materials hervorgerufen, wie beispielsweise von Wasser, wodurch neben der Trübung eine zusätzliche Kühlung der Scheibe und der damit in unmittelbarem Kontakt stehenden Bauteile erzielt wird. Außerdem führt die mit dem Aufschäumen verbundene Volumenvergrößerung dazu, dass das intumeszierende Mittel an den Stoßkanten der Brandschutzscheiben austritt und damit die Fugen zu angrenzenden Bauteilen zusätzlich abdichtet. Die intumeszierende Schicht kann beispielsweise eine Mischung aus Glycerin und Wasserglas aufweisen.

Als Brandschutzverglasung kann außerdem hitzebeständiges Einscheibensicherheitsglas wie Duran ®- oder Pyran ®-Glas verwendet werden.

Die vorliegende Erfindung betrifft außerdem ein Verfahren zur Herstellung einer Verbundplatte für ein Türblatt oder dergleichen, insbesondere für Brandschutzzwecke, mit einem Kern aus einem Plattenwerkstoff aus nichtbrennbaren Materialien oder einer Holz- oder Holzwerkstoffplatte, bei dem der Kern zumindest auf beiden Flachseiten mit einer Schicht aus Furnierholz und an wenigstens einer der Stoßkanten des Kerns mit einer Massivholzkante versehen wird, wobei das Verfahren dadurch gekennzeichnet ist, dass der Kern in der mit der Massivholzkante versehenen Stoßkante mit zumindest einer sich über die gesamte Länge dieser Stoßkante erstreckende Dehnungsnut versehen wird. Die Dehnungsnut wird vorzugsweise gefräst.

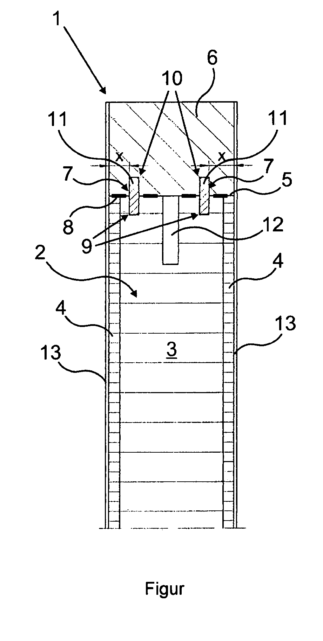

Die vorliegende Erfindung wird im Folgenden anhand eines in der einzigen Figur dargestellten Ausführungsbeispiels näher erläutert.

Hierbei zeigt die Figur eine erfindungsgemäße Verbundplatte 1 eines Türblatts einer Brandschutztür in seitlicher Schnittdarstellung. Die Verbundplatte 1 besitzt einen Kern 2, der aus einer Spanplatte 3 und beidseitig auf deren Flachseiten laminierte hochdichte Faserplatten 4 (HDF) gebildet ist.

An der horizontalen Stoßkante 5 des Kerns 2 ist eine Massivholzkante 6 gleicher Stärke mittels zweier Nut-Federverbindungen 7 und zusätzlicher Leimfugen 8 befestigt. Die Nut-Federverbindungen 7 setzen sich aus zwei gegenüberliegenden, in der Stoßkante 5 und der Massivholzkante 6 ausgebildeten Paaren von Verbindungsnuten 9, 10 und aus in diese eingesteckten und verleimten Federn 11 zusammen.

In der Stoßkante 5 ist etwa mittig zwischen den Nut-Federverbindungen 7 eine Dehnungsnut 12 vorgesehen. Sowohl die Verbindungsnuten 9, 10 als auch die Dehnungsnut 12 verlaufen jeweils parallel zueinander und zu den Flachseiten des Kerns 2, wobei der mit "X" bezeichnete Abstand der beidseitig der Dehnungsnut 12 verlaufenden Verbindungsnuten 9, 10 zur nächstliegenden Flachseite des Kerns 2 geringer ist als der Abstand zur Dehnungsnut 12. Die Flachseiten des Kerns 2 sind beidseitig mit einer Schicht aus Furnierholz 13 bedeckt, das sich ebenfalls über die Flachseiten der Massivholzkante 6 erstreckt.

### Bezugszeichenliste

- 1: Verbundplatte
- 2: Kern
- 3: Spanplatte
- 4: hochdichte Faserplatte
- 5: Stoßkante
- 6: Massivholzkante
- 7: Nut-Federverbindung
- 8: Leimfuge
- 9: Verbindungsnut
- 10: Verbindungsnut
- 11: Feder
- 12: Dehnungsnut
- 13: Furnierholz

## Patentansprüche

1. Verbundplatte (1) für ein Türblatt oder dergleichen, insbesondere für Brandschutzzwecke, mit einem Kern (2) aus einem Plattenwerkstoff, insbesondere einer Holz- oder Holzwerkstoffplatte (3, 4), wobei der Kern (2) zumindest auf beiden Flachseiten mit je einer Schicht aus Furnier (13) und an wenigstens einer der Stoßkanten (5) des Kerns (2) mit einer Massivholzkante (6) versehen ist,
**dadurch gekennzeichnet,**
**dass** der Kern (2) in der mit der Massivholzkante (6) versehenen Stoßkante (5) zumindest eine sich über die gesamte Länge dieser Stoßkante (5) erstreckende Dehnungsnut (12) aufweist.

2. Verbundplatte nach Anspruch 1,
**dadurch gekennzeichnet,**
**dass** der Kern (2) ein- oder mehrlagig aufgebaut ist und vorzugsweise Platten aus Massivholz, Sperrholz, Holzspan- und/ oder Holzfaserwerkstoffen aufweist.

3. Verbundplatte nach Anspruch 1 oder 2,
**dadurch gekennzeichnet,**
**dass** die Massivholzkante (6) an der Stoßkante (5) über wenigstens eine Nut-Federverbindung (7) befestigt ist.

4. Verbundplatte nach einem der vorstehenden Ansprüche,
**dadurch gekennzeichnet,**
**dass** die Massivholzkante (6) an der Stoßkante (5) über wenigstens zwei Nut-Federverbindungen (7) befestigt ist, deren Verbindungsnuten (9, 10) in der Stoßkante (5) beidseitig der Dehnungsnut (12) verlaufen.

5. Verbundplatte nach Anspruch 4,
**dadurch gekennzeichnet,**
**dass** die Verbindungsnuten (9, 10) jeweils in der Nähe der nächstliegenden Flachseite des Kerns (2) angeordnet sind.

6. Verbundplatte nach Anspruch 4 oder 5,
**dadurch gekennzeichnet,**
**dass** der Abstand der Verbindungsnuten (9, 10) zur nächstliegenden Flachseite des Kerns (2) geringer ist als der Abstand zur Dehnungsnut (12).

7. Verbundplatte nach einem der vorstehenden Ansprüche,
**dadurch gekennzeichnet,**
**dass** die Dehnungsnut (12) und/ oder die Verbindungsnuten (9, 10) weitestgehend parallel zu den Flachseiten des Kerns ausgebildet sind.

8. Verbundplatte nach einem der vorstehenden Ansprüche,
**dadurch gekennzeichnet,**
**dass** die Dehnungsnut (12) weitestgehend mittig in der Stoßkante (5) angeordnet ist.

9. Verbundplatte nach einem der vorstehenden Ansprüche,
**dadurch gekennzeichnet,**
**dass** die Dehnungsnut (12) einen rechteckigen, keilförmigen, halbkreisförmigen, ovalen oder schwalbenschwanzartigen Querschnitt aufweist.

10. Verbundplatte nach einem der Ansprüche 3 bis 12,
**dadurch gekennzeichnet,**
**dass** die Feder (11) der Nut-Federverbindung (7) aus Holz besteht und vorzugsweise mit den Verbindungsnuten (9, 10) verklebt ist.

11. Verbundplatte nach einem der vorstehenden Ansprüche,
**dadurch gekennzeichnet,**
**dass** die Massivholzkante (6) dieselbe Stärke aufweist wie der Kern (2).

12. Verbundplatte nach einem der vorstehenden Ansprüche,
**dadurch gekennzeichnet,**
**dass** sich die Schichten aus Furnierholz (13) über die Massivholzkante (6) erstrecken.

13. Verbundplatte nach einem der vorstehenden Ansprüche,
**dadurch gekennzeichnet,**
**dass** die Massivholzkante (6) an der Stoßkante (5) mittels eines Klebstoffs befestigt ist.

14. Verschließbare Brandschutzöffnung, insbesondere als Brandschutztür, enthaltend eine Verbundplatte (1) nach einem der Ansprüche 1 bis 16.

15. Verschließbare Brandschutzöffnung nach Anspruch 14,
**dadurch gekennzeichnet,**
**dass** die Verbundplatte (1) eine Ausnehmung aufweist, in die eine Brandschutzscheibe eingesetzt ist, insbesondere eine intumeszierende Brandschutzscheibe.

16. Verfahren zur Herstellung einer Verbundplatte (1) für ein Türblatt oder dergleichen, insbesondere für Brandschutzzwecke, mit einem Kern (2) aus einem Plattenwerkstoff, insbesondere einer Holz- oder Holzwerkstoffplatte (3, 4), bei dem der Kern (2) zumindest auf beiden Flachseiten mit einer Schicht aus Furnierholz (13) und an wenigstens einer der Stoßkanten (5) des Kerns (2) mit einer Massivholzkante (6) versehen wird,
**dadurch gekennzeichnet,**
**dass** der Kern (2) in der mit der Massivholzkante (6) versehenen Stoßkante (5) mit zumindest einer sich über die gesamte Länge dieser Stoßkante (5) erstreckende Dehnungsnut (12) versehen wird.

17. Verfahren nach Anspruch 16,
**dadurch gekennzeichnet, dass** die Dehnungsnut (12) gefräst wird.
